# EUROPÄISCHE PATENTSCHRIFT

(11) **EP 0 875 713 B1**
(45) Veröffentlichungstag und Bekanntmachung des Hinweises auf die Patenterteilung: **19.11.2003**
(21) Anmeldenummer: 98107709.2
(22) Anmeldetag: 28.04.1998
(51) Int. Cl.: F16L 55/165, B29C 63/00

(54) **Schlauchförmiges Auskleidungsmaterial**
Tubular lining material
Matériau de revêtement tubulaire

(30) Priorität: 02.05.1997 DE 19718655
(43) Veröffentlichungstag der Anmeldung: 04.11.1998
(73) Patentinhaber: Karl Otto Braun KG, 67752 Wolfstein (DE)
(72) Erfinder: Jung, Harald, 67757 Kreimbach (DE); Bunschi, Hans, Dr., 8753 Mollis (CH); Scheib, Heinz, 67744 Kappeln (DE)
(74) Vertreter: Kindler, Matthias, Dr. Dipl.-Chem.

(56) Entgegenhaltungen:
- WO-A-91/15707
- GB-A- 2 104 615
- US-A- 4 778 553
- US-A- 5 501 248

## Beschreibung

Die Erfindung betrifft ein schlauchförmiges Auskleidungsmaterial, insbesondere ein schlauchförmiges Auskleidungsmaterial für sanierungsbedürftige Kanal- und/oder Rohrleitungen (nachfolgend abgekürzt als Rohrleitungen bezeichnet), ein Verfahren zur Herstellung einer Rohrauskleidung, eine aus dem Auskleidungsmaterial hergestellte Rohrauskleidung, sowie die Verwendung des Auskleidungsmaterial zu deren Herstellung.

Bei der Sanierung von verdeckt verlegten Kanälen und Rohrleitungen, insbesondere Hauskanälen mit geringem Rohrdurchmesser, beispielsweise im Mauerwerk oder unter der Erde, ist die Sanierung durch Entfernen und Austausch der defekten Teilbereiche eine aufwendige und kostenintensive Maßnahme. Die dabei notwendigen Erd- und/oder Aufstemmarbeiten sind zeit- und kostenaufwendig, häufig schwierig durchzuführen und erfordern besondere Maßnahmen zum Schutz vor Verschmutzung, insbesondere bei Arbeiten die in Gebäuden durchgeführt werden. Ferner stellen die dadurch entstehenden Baustellen eine potentielle Gefahrenquelle und eine Belästigung der Umgebung dar. Daher besteht ein großer Bedarf nach Alternativen baulichen Vorgehensweisen, die eine Auskleidung von Rohrleitungen erlauben, ohne daß dabei die Leitungen freigelegt und eventuell Leitungsteile entfernt und ausgetauscht werden müssen.

Es sind bislang verschiedene nicht-invasive Verfahren zur Rohrsauskleidung bekannt, sowie verschiedene Materialien die zu diesem Zweck verwendet werden.

Zur Ausbesserung punktueller Schäden in nichtbegehbaren Rohrleitungen werden harzgetränkte Laminatmanschetten verwendet, die aus mit einem beispielsweise kalthärtenden Harz getränkten Glasfasergewebe bestehen. Die harzgetränkten und auf die gewünschte Dimension zugeschnittenen Glasfasermatten werden mit Trennfolie versehen und um einen in das Rohr einführbaren Packer gewickelt, der dann in das Rohr eingelassen wird. An der beschädigten Stelle wird diese Vorrichtung positioniert und mit Druck beaufschlagt, so daß das harzgetränkte Glasfasergewebe eng an das Rohr angepreßt wird und dort aushärten. Nach dem Aushärten des Harzes wird die Einführvorrichtung wieder aus dem Rohr entfernt, und es bleibt eine Harz/Glasfaser-Verbundstoffmanschette in der Rohrleitung zurück.

Zur Auskleidung längerer Rohrabschnitte ist ein System bekannt, das aus einem Polyesternadelfilzschlauch, einem Zwei-Komponenten Epoxidharz, mit dem der Filzschlauch getränkt wird, und einem Silikon-Kalibrierschlauch besteht. Der Kalibrierschlauch wird in vorherbestimmter Länge in den Nadelfilzschlauch eingezogen und am Ende verschlossen. Nach dem Tränken des Nadelfilzschlauches mit Epoxidharz wird das System in die Rohrleitung mittels einer Seilwinde eingezogen. Anschließend wird der Kalibrierschlauch mit Druckluft beaufschlagt, wodurch der getränkte Filzschlauch eng an die Rohrleitung angedrückt wird. Nach dem Aushärten des Harzes wird der Druck abgelassen und der Kalibrierschlauch entfernt, und es bleibt ein Filz/Harz-Verbundstoffrohr in der Rohrleitung zurück.

Dieses System eignet sich in erster Linie zur Auskleidung von Hausanschlußleitungen, bei denen beide Rohrenden gut zugänglich sind. Es ist nicht einsetzbar für Rohrleitungen, die ein Hindurchziehen des Schlauchsystemes nicht zulassen, und erfordert darüber hinaus eine sehr umsichtige Arbeitsweise, da das Expoxidharz außen auf den Nadelfilzschlauch aufgebracht wird. Ferner ist das System nicht geeignet zur faltenfreien Sanierung von Rohrleitungen mit Bögen von mehr als 67°.

In einem anderen Verfahren wird ein System eingesetzt, das aus einem Gewebeschlauch mit einem Glas/Filz/Glas SandwichAufbau, der mit einem lichthärtenden UP-Harz getränkt ist, einer hochflexiblen Innenfolie und einer styroldichten UVundurchlässigen Außenfolie besteht. Dieses System (Liner) wird entsprechend dem Durchmesser und der Länge der auszukleidenden Leitung im Werk vorkonfektioniert und von vorhandenen Schächten aus in die Leitung eingezogen. Dann wird mittels Luftdruck eine weitere Folie im Umstülpverfahren in das Rohr eingepreßt, wodurch der eingezogene Liner an die Rohrwandung angedrückt wird. Mit zuvor montierten, mit UV-Lampen ausgerüsteten Packern wird das so angepreßte Harz/Gewebeschlauchsystem mit UV-Licht bestrahlt und ausgehärtet.

Auch dieses System ist für Rohre mit stark gewinkelten Bögen von beispielsweise 90° nicht geeignet. Ferner muß auch hier eine Möglichkeit zum Einziehen des harzgetränkten Gewebeschlauches mittels einer Winde gegeben sein, und das Entfernen der Innenfolie nach dem Aushärten des Harzes erfordert einen zusätzlichen Arbeitsschritt.

Darüber hinaus weisen die oben beschriebenen Auskleidungsmaterialien den Nachteil auf, daß sie in Längsrichtung eine Naht aufweisen, entlang derer das ursprünglich flächige Material zu einem Schlauchförmigen Gebilde verbunden ist. Diese Naht stellt eine potentielle Bruchstelle dar, an der eine Ablösung der Auskleidung ihren Ausgang nehmen können, und die zur die Ausbildung von Falten führen können.

Ein schlauchförmiges Auskleidungsmaterial für Rohrleitungen, die Krümmungen und gebogene Abschnitte enthalten können ist in DE 3 505 107 offenbart. Dieses Auskleidungsmaterial besteht aus einem schlauchförmigen, gestrickten oder gewebten Textilmantel, der mit einer luftundurchlässigen Beschichtung aus einem flexiblen Kunstharz beschichtet ist. Zur Auskleidung eines Rohres wird dieses Auskleidungsmaterial im Umstülpverfahren unter Druckbeaufschlagung in das Rohr eingeführt, so daß die Textilseite auf der Rohrinnenwand zu liegen kommt und die Kunstharzbeschichtung die innerste Schicht des ausgekleideten Rohres bildet. Mit einem zuvor in das Auskleidungsmaterial eingebrachten Bindemittel wird die Textilschicht mit dem äußeren Rohr haftend verbunden.

Der Textilmantel ist ein kompaktes, nicht komprimierbares Gewebe oder Gestricke aus gekräuselten Polybutylenterephthalatfasern (Kettfasern) und anderen Synthesefasern (Schußfasern). Sowohl der Textilmantel als auch das zu dessen Beschichtung verwendete Kunstharz ist biaxial dehnbar, wodurch bei der Druckbeaufschlagung des in das Rohr eingebrachten Auskleidungsmaterials eine Anpassung des Auskleidungsmaterials an die Form der Rohrleitung erfolgt, insbesondere in Krümmungen und gebogenen Abschnitten. Dadurch soll eine Faltenbildung vermieden werden.

Intensive experimentelle Studien der hiesigen Erfinder haben jedoch ergeben, daß auch ein Auskleidungsmaterial, das aus einem biaxial dehnbaren Textilmantel, der mit einem flexiblen Kunstharz beschichtet ist, eine Auskleidung von komplizierten Rohrabschnitten, wie beispielsweise Krümmungen von 90°, nicht in befriedigender Weise faltenfrei erzielt werden kann. Vielmehr führt ein derartiger Verbundwerkstoff im Bereich von starken Krümmungen wie beispielsweise 90° zu Faltenbildung im Innenbogen bzw. zur Ablösung des Auskleidungsmaterials von der Innenwand des Rohres im Außenbogen. Daher konnte dieses Problem nicht befriedigend gelöst werden.

US 4 778 553 offenbart ein Auskleidungsmaterial, dass eine innere Schicht aus einem Harzabsorbierendem Material (beispielsweise einem faserigem Filz) und eine lose darum herum befindliche Hülle aus einer Kunststofffolie (beispielsweise Polyuhrethan) umfasst, siehe beispielsweise Seite 4, Zeilen 13-18 und Figur 4.

Ferner beschreibt US 5 501 248 ein Auskleidungsmaterial, dass einem nahtlosen Plüschtextilschlauch gebildet wird, siehe hierzu beispielsweise die Zusammenfassung sowie Spalte 7, Zeile 24 bis Spalte 8, Zeile 19 und die Figuren 1 (a) und (b).

Folglich lag der Erfindung die Aufgabe zugrunde, ein Auskleidungsmaterial zu entwickeln, das sich zur faltenfreien Auskleidung von sanierungsbedürftigen Rohrleitungen eignet, die eine komplizierte Struktur aufweisen, insbesondere Krümmungen von bis zu 90°, Änderungen des Rohrinnendurchmessers entlang der auszukleidenden Rohrleitung oder verwinkelte Teilstücke mit komplizierter Geometrie im Bereich von Verzweigungsanschlüssen.

Ferner soll ein Verfahren bereitgestellt werden, daß die Herstellung einer Rohrauskleidung in einer einfachen, sauberen und kostengünstigen Weise ermöglicht.

In direktem Zusammenhang damit ist es außerdem die Aufgabe der vorliegenden Erfindung eine Rohrauskleidung bereitzustellen, die hervorragende Abdichtungseigenschaften und Tragfähigkeit besitzt und in allen Bereichen eng am ausgekleideten Rohr anliegt, ohne sich von diesem zu lösen oder Falten zu bilden.

Die obigen Aufgaben konnten erfindungsgemäß gelöst werden durch Bereitstellung eines Auskleidungsmaterials, wie in Anspruch 1 definiert, sowie durch die Rohrauskleidung, wie sie in Anspruch 18 definiert ist und durch das Verfahren zu deren Herstellung, wie in Anspruch 11 definiert.

Durch diese überraschende konfektionstechnische Lösung konnte ein neues Auskleidungsmaterial sowie eine neue Rohrauskleidung für insbesondere.den Bereich der öffentlichen sowie privaten Leitungssanierung bereitgestellt werden, die nicht nur eine Nuancierung zum Stand der Technik darstellt, sondern diesen durch folgende Vorteile erheblich erweitern:
- Bereitstellung eines Auskleidungsmaterials, das enganliegend und faltenfrei auch in komplizierte Rohrleitungssysteme installiert werden kann.
- Herstellung eines vom Keller bis zum Hauptkanal kompletten naht- und muffenlosen Rohres, unabhängig von Bögen und seitlichen Anschlüssen.
- Wegfall des Erfordernisses der leichten Zugänglichkeit der Enden des zu sanierenden Rohrabschnitts.
- Leichte Handhabbarkeit des Auskleidungsmaterials hinsichtlich der Vorbereitungshandlungen und Einführung in die schadhafte Rohrleitung, die es ermöglicht, auch unter räumlich engen Bedingungen eine Rohrauskleidung durchzuführen.
- Sehr saubere Durchführung der Rohrsanierung, die ein Arbeiten auch in Gebäuden erlaubt.

Nachfolgend werden das erfindungsgemäße Auskleidungsmaterial, die Rohrauskleidung und das Verfahren zu deren Herstellung detaillierter beschrieben und anschließend anhand von konkreten Ausführungsbeispielen weiter illustriert.

Das erfindungsgemäße Auskleidungsmaterial umfaßt einen nahtlosen Plüsch-Textilschlauch (nachfolgend als Textilschlauch bezeichnet) und einen darum koaxial und freibeweglich angeordneten Folienschlauch.

Der Textilschlauch ist ein durch ein Rundstrickverfahren nahtlos hergestellter Rundstrickplüsch. Darunter versteht man eine rundgestrickte Maschenware, bei der aus dem Warengrund ein- oder beidseitig Fadenstreifen (Henkel) hervorstehen. Durch eine geeignete Auswahl der Verstrickungsparameter lassen sich für das jeweils verwendete Faserausgangsmaterial die zur Erzielung der erfindungsgemäßen Wirkung erforderlichen mechanischen Eigenschaften des Textilschlauches einstellen. Eine detaillierte Beschreibung der technischen Aspekte der Plüschherstellung ist beispielsweise beschrieben in "Rundstricken", Iyer-Mammel-Schäch, Theorie + Praxis der Maschentechnik, Meisenbach, Bamberg (1991).

Als Fasermaterialien für den Textilschlauch können beliebige Kunstfasermaterialien verwendet werden, solange sie eine hinreichende Resistenz gegen das Umgebungsmedium der Vorrichtung aufweisen, zu deren Auskleidung das Auskleidungsmaterial verwendet werden soll.

Bevorzugte Fasermaterialien sind Polyester, Polyester(hochfest), Aramid, Polyamid, Kevlar, Polyurethan (PU), sowie Glasfasern. Ferner können Mischungen aus diesen Materialien verwendet werden, beispielsweise eine Kombination von Polyestergrundfasern mit Glasfasern für die Plüschhenkel, oder Henkelfasern aus Polyester in Kombination mit Grundfasern aus Aramid, Polyamid, Polyurethan.

Zudem können für die Henkel und/oder den Warengrund zwei oder mehr verschiedene Fasermaterialien verwendet werden. Bei Verwendung gleicher Faserklassen (z.B. Polyester oder Polyamid) für Grund- und Henkelfasern ist es nicht erforderlich, daß diese miteinander identisch sind, d.h. es können beispielsweise unterschiedliche Polyester-Fasern für die Henkel bzw. den Warengrund verwendet werden, die sich hinsichtlich ihrer Zusammensetzung, Faserdicke und anderer typischer Faserkenngrößen unterscheiden können. Besonders bevorzugte Fasern für den Plüsch-Textilschlauch sind Polyester-Fasern und Polyester(hochfest)-Fasern.

Damit aus dem erfindungsgemäßen Auskleidungsmaterial eine Auskleidung hergestellt werden kann, die bevorzugte dimensionale und mechanische Eigenschaften besitzt, ist es wünschenswert, daß der Textilschlauch bestimmte Erfordernisse hinsichtlich der Strickdichte, der Schlauchdicke und der Materialverteilung erfüllt, damit die erfindungsgemäß bevorzugten Dehnbarkeiten in Längs- und Querrichtung sowie die Komprimierbarkeit des Textilschlauches erzielt werden.

Die Komprimierbarkeit kennzeichnet die Änderung der Dicke einer einzelnen Textilschlauchlage die beim Anlegen eines Kompressionsdruckes auf diese Schicht zwischen zwei starren Oberflächen erzielt wird. Erfindungsgemäß besitzt der Textilschlauch vorzugsweise eine Komprimierbarkeit, die einer Abnahme der Dicke einer einzelnen Schicht von 5-60% der unkomprimierten Dicke entspricht, wenn eine Lage des Textilschlauchs mit einer Kompressionskraft von 0.4-0.8 bar zwischen zwei starren Flächen zusammengedrückt wird.

Die Komprimierbarkeit wird zu einem guten Teil bestimmt durch das Verhältnis des relativ schwach komprimierbaren Warengrundes zu den daraus hervorstehenden, wesentlich leichter komprimierbaren Fadenschleifen (Henkel). Erfindungsgemäß liegt das bevorzugte Verhältnis der Materialanteile, bezogen auf das Gewicht, von Grund zu Henkel im Bereich von 1:99 bis 25:75, weiter bevorzugt bei 2:98 bis 20:80, insbesondere bei 2:98 bis 15:85.

Die Anzahl der Maschenreihen in dem Textilschlauch ist nicht sonderlich eingeschränkt, und kann in Abhängigkeit von dem verwendeten Fasermaterial und den zu erzielenden mechanischen Eigenschaften vorzugsweise im Bereich von 30 bis 80 Maschenreihen(MR)/10 cm liegen, weiter bevorzugt im Bereich von 35 bis 70 MR/10 cm, insbesondere von 38 bis 60 MR/10 cm.

Die einfache Schlauchdicke ist in Abhängigkeit von der angestrebten Wandstärke der aus dem Auskleidungsmaterial herzustellenden Auskleidung zu bestimmen. Für übliche Anwendungszwecke, wie beispielsweise die Auskleidung von Rohrleitungen mit einem Innendurchmesser von 80 bis 300 mm sind Schlauchdicken im Bereich von 2 bis 10 mm im unkomprimierten Zustand allgemein anwendbar. Für spezielle Anwendungszwecke kann die Schlauchdicke jedoch auch größere Werte annehmen. Erfindungsgmäß bevorzugt sind Schlauchdicken im Bereich von 3 bis 8 mm, insbesondere von 4 bis 6 mm.

Ein bevorzugtes erfindungsgemäßes Merkmal ist die biaxiale Dehnbarkeit des Textilschlauches in axialer sowie radialer Richtung, vorzugsweise in einem Verhältnis von axial/radial von etwa 1:3 bis 1:5. Aufgrund dieser Eigenschaft kann bei der Herstellung einer Auskleidung mit dem erfindungsgemäßen Auskleidungsmaterial der Effekt erzielt werden, daß die Auskleidung stets an der ausgekleideten Vorrichtung anliegt, unabhängig davon ob sich entlang der ausgekleideten Strecke der Radius ändert, Bögen auftreten, Ein- und Ausgänge vorhanden sind und/oder nicht oder nur schwer zu entfernende kleinere Hindernisse in dem auszukleidenden Bereich verblieben sind.

Die Dehnbarkeit in Längsrichtung beträgt 10 bis 70 %, bevorzugt 20 bis 55 %. In Querrichtung ist die Dehnbarkeit deutlich höher und liegt im Bereich von 50 bis 200 %, bevorzugt bei 70 bis 150 %. Die Dehnbarkeit in Längs- und Querrichtung kann in dem Fachmann geläufiger Weise durch Auswahl der Strickparameter und durch eine geeignete Auswahl der Mengen, Dicken und Verhältnisse des zu verstrickenden Materials eingestellt werden.

Bei der Herstellung einer Auskleidung aus dem erfindungsgemäßen Auskleidungsmaterial wird vorzugsweise ein Verfahren angewandt, bei dem das Auskleidungsmaterial unter Druckbeaufschlagung in einem Inversionsschlauch in das auszukleidende Volumen eingeführt wird, wobei das Auskleidungsmaterial von innen nach außen umgestülpt und an die Wandung des auszukleidenden Volumens angedrückt wird.

Im Hinblick auf den für das Inversionsverfahren erforderlichen Einpreß- und Haltedruck ist es bevorzugt, daß die Dehnbarkeit des Textilschlauches überwiegend plastischer Natur ist, und nur einen nicht zu hohen Anteil elastischer Dehnbarkeit enthält. Dadurch kann nach dem Ein- und Anpressen des Auskleidungsmaterials in das auszukleidende Volumen der Haltedruck während der Aushärtungszeit des weiter unten beschriebenen Harzes reduziert werden, ohne daß es aufgrund von elastischen Rückstellkräften in dem gedehnten Textilschlauch zu einer Ablösung des eingebrachten Materials kommt. Vorzugsweise besitzt der Textilschlauch eine Rückstellung gemäß DIN 61632 in Quer- wie in Längsrichtung von 60% oder weniger, weiter bevorzugt von 40% oder weniger.

Die Dehnbarkeit des Textilschlauches wird bevorzugt so eingestellt, daß einerseits gewährleistet ist, daß auch Bögen von 90° mit dem erfindungsgemäßen Auskleidungsmaterial so ausgekleidet werden können, daß der Textilschlauch stets eng an der Wandung anliegt, andererseits jedoch keine Auspressung aus der Endöffnung erfolgen, die zu einer Ablösung der Auskleidung von der Wand führen kann. Da dieser Effekt in erster Linie von der Dehnbarkeit in Längsrichtung abhängt, liegen die Werte dieses Parameters vorzugsweise in dem oben angegebenen Bereich.

Durch die erfindungsgemäß bevorzugte Kombination der oben beschriebenen Komprimierbarkeits- und Flexibilitäts-(Dehnbarkeits-)werte des Auskleidungsmaterials wird bei der Herstellung von Rohrauskleidungen im Bereich von seitlichen Verzweigungen zusätzlich der vorteilhafte Effekt erzielt, daß das Material zu einem gewissen Maße in die abzweigende Leitung hineingedrückt wird, wodurch in der direkten Umgebung des Zusammenstoßes der Rohre der Materialauftrag dünner ist als im restlichen ausgekleideten Volumen. Dadurch lassen sich in nachfolgenden Schritten leichter quasi-nahtlose Übergänge von einer Leitung in die andere erzeugen.

Der Folienschlauch, der zusammen mit dem Textilschlauch die essentiellen Bestandteile des erfindungsgemäßen Auskleidungsmaterials darstellt, besitzt einen Innendurchmesser der es erlaubt den Textilschlauch freibeweglich in diesen einzuführen. Da bei der Herstellung einer Auskleidung unter Verwendung des Auskleidungsmaterials dieses von innen nach außen umgekrempelt wird, ist es nicht erforderlich, daß der Textilschlauch ohne Faltenwurf in den Folienschlauch hineinpaßt.

Bei der Herstellung einer Auskleidung aus dem erfindungsgemäßen Auskleidungsmaterial bildet der Folienschlauch die Schicht, die mit dem ausgekleideten Volumen in direktem Kontakt steht. Daher ist es bevorzugt, daß sie gegenüber dem Medium, mit dem sie in Kontakt gerät, beständig ist. Dies schließt eine chemische Beständigkeit gegenüber den durch das ausgekleidete Volumen hindurchgeleiteten Substanzen ein, sowie Abriebbeständigkeit gegenüber transportierten Feststoffpartikeln und Temperaturbeständigkeit innerhalb des für den jeweiligen Einsatzzweck vorgesehenen Bereiches.

Weiterhin ist es erfindungsgemäß bevorzugt, daß sowohl der Folienschlauch als auch der Textilschlauch des erfindungsgemäßen Auskleidungsmaterials eine Temperaturbeständigkeit von 80°C oder darüber aufweisen, besonders bevorzugt von 100°C oder darüber.

Ferner ist es erfindungsgemäß bevorzugt, daß der Folienschlauch selber bereits eine Abdichtungsfunktion besitzt. Daher ist es bevorzugt, daß der Folienschlauch je nach Verwendungszweck eine möglichst geringe Gas- und/oder Flüssigkeitsdurchlässigkeit, insbesondere Wasserdurchlässigkeit, aufweist.

Das Material für den Folienschlauch ist nicht sonderlich beschränkt, solange die oben beschriebenen Eigenschaften erfüllt werden können und der Folienschlauch darüber hinaus unter ökologischen Gesichtspunkten annehmbar ist.

Wie weiter unten noch ausführlicher dargelegt wird besteht in einer bevorzugten Ausführungsform die einschränkende Bedingung, daß der Folienschlauch mit der härtbaren Harzzusammensetzung kompatibel ist, die als Imprägnierstoff in dem unten beschriebenen Verfahren und allgemein zu Herstellung der erfindungsgemäßen Auskleidung eingesetzt wird, und mit diesem zu einer haftenden Einheit verbunden wird.

Da der Folienschlauch in der aus dem erfindungsgemäßen Auskleidungsmaterial hergestellten Auskleidung als innerste Schicht der ausgekleideten Vorrichtung, beispielsweise einem Kanal oder Rohr, verbleibt, ist es wünschenswert, daß das Harz mit dem Schlauch in einer solchen Weise reagiert, daß nach dem Aushärten ein fest verschweißtes Laminat aus dem Schlauch und dem ausgehärteten Harz vorliegt. Andernfalls kann die Gefahr bestehen, daß sich der Folienschlauch von dem ausgehärteten Harz ablöst und dadurch nachträglich Faltenbildungen und Verstopfungen in dem ausgekleideten Hohlraum auftreten.

Andererseits ist es vorteilhaft, wenn der Folienschlauch gegenüber der härtbaren Harzzusammensetzung so beständig ist, daß er nicht während der Aushärtphase der Harzzusammensetzung aufgelöst und zerstört wird. Daher wird der Fachmann das Material und die Materialstärke des Folienschlauches vorzugsweise unter gleichzeitiger Berücksichtigung der zur Imprägnierung des Textilschlauches vorgesehenen Harzzusammensetzung auswählen.

Angesichts der üblicherweise als Imprägnierstoffe verwendbaren Harzzusammensetzungen sind für den Folienschlauch Materialien wie Polyester, Polyurethan und Polyesterurethan bevorzugt. Für besondere Anwendungszwecke können auch Schlauchfolien aus Silikonharz geeignet sein.

Die Dicke des Folienschlauches kann in Abhängigkeit von den gewünschten Dichtungseigenschaften, der Kompatibilität mit der zu verwendenden härtbaren Harzzusammensetzung und der zur Dehnung des Folienschlauches erforderlichen Kraft ausgewählt werden. Im allgemeinen sind Folienschlauchstärken von 50 bis 250 µm bevorzugt, insbesondere von 80 bis 200 µm.

Ebenso wie im Zusammenhang mit dem Textilschlauch beschrieben ist es bevorzugt, daß auch der Folienschlauch eine Dehnbarkeit in Längs- sowie in Querrichtung besitzt. Im allgemeinen zeigen die für den Folienschlauch geeigneten Materialien Dehnbarkeiten, die deutlich über den Dehnbarkeitswerten des Textilschlauches liegen, so daß diese Eigenschaft an sich kein kritisches Kriterium der vorliegenden Erfindung darstellt. Es ist jedoch vorteilhaft, daß aus den gleichen Gründen wie oben beschrieben die Dehnbarkeit einen nicht zu hohen Anteil elastischer Dehnbarkeit aufweist. Vorzugsweise ist der Rückzug nach DIN 61632 in Quer- wie in Längsrichtung 60% oder weniger, weiter bevorzugt 40% oder weniger.

Hinsichtlich der zur Dehnung des Folienschlauches erforderlichen Kraft ist es bevorzugt, daß diese einen bestimmten Grenzwert nicht überschreitet, damit der erforderliche Invertierungs- und Haltedruck für das zur Herstellung einer Auskleidung bevorzugt eingesetzte Inversionsverfahren nicht zu groß wird. Daher übersteigt die Kraft, die zur Dehnung eines einlagigen Schlauchfolienmaterials um 40 % erforderlich ist, einen Betrag von 10 N/cm nicht.

Das erfindungsgemäße Verfahren ist ein Verfahren zur Herstellung einer Rohrauskleidung, in dem das erfindungsgemäße Auskleidungsmaterial eingesetzt wird. Genauer umfaßt es
a) das Imprägnieren eines wie oben beschriebenen erfindungsgemäßen Auskleidungsmaterials in einer geeigneten Längen- und Durchmesserdimensionierung für den vorgesehenen individuellen Einsatz mit einer härtbaren Harzzusammensetzung (Imprägnierstoff),
b) das Einführen des imprägnierten Auskleidungsmaterials aus Schritt a) in einen Inversionsdruckschlauch,
c) Einpressen der Anordnung aus Schritt b) in den auszukleidenden Rohrabschnitt mittels eines druckbetriebenen Inversionsverfahrens und
d) das Aushärten des Imprägnierstoffes unter Beibehaltung eines Druckes in dem Inversionsschlauch, der das Andrücken des imprägnierten Auskleidungsmaterials an die Wandung des Rohrabschnitts gewährleistet.

Nach diesem Verfahren lassen sich Auskleidungen herstellen, die in allen Bereichen eng und faltenfrei an der Wandung des ausgekleideten Hohlraumes anliegen, auch in kritischen Bereichen wie in Bögen von bis zu 90°, in Bereichen in denen der Durchmesser des ausgekleideten Hohlraumes eingeengt oder ausgeweitet wird, sowie im Bereich von Abzweigenden oder hinzutretenden Seitenleitungen. Das Verfahren ist besonders geeignet zur Auskleidung von Kanälen und Rohren mit einem Innendurchmesser von 80 bis 400 mm, insbesondere von 100 bis 250 mm.

Zur Erzielung besonders vorteilhafter Ergebnisse ist es bevorzugt, daß das in dem obigen Verfahren eingesetzte Auskleidungsmaterial so dimensioniert ist, daß der ungedehnte Textilschlauch und der ungedehnte Folienschlauch jeweils einen Durchmesser aufweisen, der kleiner ist als der Innnendurchmesser der im Schritt d) erhaltenen Auskleidung.

Für die Wandstärke der nach dem erfindungsgemäßen Verfahren hergestellten Auskleidung ist es bevorzugt, daß diese in Abhängigkeit von ihrem Durchmesser im Bereich von ca. 2 bis 8 mm liegt, weiter Bevorzugt bei 3 bis 7 mm.

Aus statischen Modellrechnungen unter Annahme einer Sicherheit von ≥ 2, einer Verkehrslast von 30 t, wie sie etwa im Bereich der Einmündung von Hauskanalisationen in den Hauptkanal unter der Straße vorliegt, einer Grundwasserüberdeckung der Leitung von 1 m und einem Langzeit-E-Modul von 1200 N/mm² (Erwartungswert nach 50 Jahren) ergibt sich für die Auskleidung von Rohrleitungen mit einem Innendurchmesser von 100 bis 200 mm eine vom Durchmesser linear abhängige erforderliche Wandstärke von 2 bis 4 mm.

Bei Auskleidungen in Bereichen, in denen statische Überlegungen weniger kritisch sind, wie beispielsweise bei in Gebäuden verlegten Rohrleitungen, können die erzielten Wanddicken jedoch auch niedriger sein, solange die erforderlichen Abdichtungs- und sonstigen Eigenschaften erzielt werden.

Insgesamt ist es nach den obigen Ausführungen erfahrungsgemäß bevorzugt, daß innerhalb des Durchmesserbereiches von 80 bis 400 mm unter Abwägung der statischen Erfordernisse einerseits und einer möglichst geringen Abnahme der Rohrquerschnittsfläche andererseits die Wandstärke der hergestellten Auskleidung im Bereich von ca. 2% des Rohrinnendurchmessers liegt.

In dem erfindungsgemäßen Verfahren ist es bevorzugt, und in der unter realistischen Bedingungen erfolgenden Durchführung häufig erforderlich, daß das auszukleidende Rohrleitungstück vor den eigentlichen Auskleidungsmaßnahmen gereinigt und von Hindernissen, wie beispielsweise vorstehende Einläufen, Wurzeleinwüchsen, stark versetzten Muffen, Ablagerungen usw. befreit wird.

Weitere erforderliche vorbereitende Maßnahmen sind die Ausmessung der Länge und des Durchmessers der auszukleidenden Leitung und das Einmessen möglicher Zuleitungen. Bei der Auskleidung von Abwasserleitungen muß ferner ein Zutritt zum Abwasserkanal sichergestellt werden, wobei im Idealfall Schächte vorhanden sind, in Einzelfällen jedoch auch die vorhergehende Erstellung eines Schachtes erforderlich sein kann. In vielen Fällen, zumindest im Falle von Hausleitungsauskleidungen kann der Einbau jedoch direkt von einem geeigneten Raum des Gebäudes aus erfolgen, ohne daß ein Zugang zum Schacht zwingend erforderlich ist.

Erfindungsgemäß ist es bevorzugt, daß insbesondere dann, wenn die Gefahr besteht, daß Wasser oder andere Verunreinigungen von außen in die auszukleidende Kanal- oder Rohrleitung eindringen kann, vor der Durchführung des erfindungsgmäßen Verfahrens, spätestens jedoch vor Schritt c) ein entprechendes Abdichtungsmaterial, beispielsweise ein geeigneter Folienschlauch (Preliner), in den auszukleidenden Rohrabschnitt eingebracht wird.

Diese Maßnahme dient ferner dazu, daß eine Kontaminierung der Umgebung der auszukleidenden Leitung mit den in dem erfindungsgemäßen Verfahren eingesetzten Imprägnierstoffen ausgeschlossen werden kann.

Im Laufe der Vorbereitung der für das Inversionsverfahren erforderlichen Installationsanlage einschließlich der Überwachungselemente (Kamera und/oder Rohrsanierungsroboter) wird das erfindungsgemäße Auskleidungsmaterial auf die gewünschte Länge zurechtgeschnitten, die Menge der zur Imprägnierung benötigten Komponenten berechnet und die Harzzusammensetzung entsprechend zusammengemischt.

Die als Imprägnierstoff zu verwendende härtbare Harzzusammensetzung ist nicht sonderlich beschränkt, solange die folgenden Erfordernisse und Eigenschaften erfüllt werden.

wie oben schon bemerkt ist es vorteilhaft,wenn die härtbare Harzzusammensetzung in Abhängigkeit von dem Material des Folienschlauches des Auskleidungsmaterials ausgewählt wird. Erfindungsgmäß bevorzugte Harzzusammensetzungen sind kalthärtende Epoxidharze, kalthärtende ungesättigte Polyesterharze (UP-Harze), UV-härtende UP-Harze und PU-Harze.

Beispiele für kommerziell erhältliche, erfindungsgemäß verwendbare Harzzusammensetzungen sind Beckopox®-EP 116 und - EP 117 (Hoechst AG, Frankfurt (vorzugsweise in Kombination mit den Spezialhärtern Beckopox®-VEH 2628, -EH 640 oder -EH 641, Hoechst AG, Frankfurt), Concresive® APS 2200 (MBT Ceilcoat, Biebesheim), Alpolit®-UP 745, und -UP 746 (Vianova Resins GmbH, Mainz-Kastel),sowie Palatal®-Harze (BASF AG, Ludwigshafen).

Unter Berücksichtigung verarbeitungstechnischer Aspekte ist es von Vorteil, wenn das Harz einerseits hinreichend niedrigviskos ist, so daß es vor dem Einbringen des erfindungsgemäßen Auskleidungsmaterials in die auszukleidende Rohrleitung zügig und gleichmäßig in das Auskleidungsmaterial eingefüllt werden kann. Andererseits soll die Viskosität ausreichend hoch sein, damit die Harzzusammensetzung nicht während des Aushärtungsvorganges in der ausgekleideten Rohrleitung abläuft und es dadurch zu einer ungleichen Verteilung des Harzes und der Ausbildung ungleichmäßiger Wandstärken kommt. Unter diesem Aspekt ist es besonders bevorzugt, wenn die verwendete härtbare Harzzusammensetzung thixotrope Eigenschaften besitzt.

Bei der Verwendung einer kalthärtenden Harzzusammensetzung ist es ferner erforderlich, daß die beim Anrühren der Harzkomponenten eingestellte Topfzeit so bemessen ist, daß nach dem Vermischen der Harzzusammensetzung mit dem Bindemittel und weiteren möglichen Zusatzstoffen noch ausreichend Zeit bleibt, die Harzzusammensetzung gleichmäßig in das Auskleidungsmaterial einzubringen, und das so gefüllte Material in die auszukleidende Leitung einzuführen und auszurichten. Je nach Länge der auszukleidenden Rohrleitung und der in das Auskleidungsmaterial einzubringenden Harzmenge liegt die erforderliche Topfzeit im allgemeinen im Bereich von 30 Minuten bis zu 2 Stunden. Für spezielle Anwendungsfälle können jedoch auch Topfzeiten gewählt werden, die diesen Bereich deutlich unter- oder überschreiten.

Bei der Verwendung von UV-härtbaren Harzzusammensetzungen ist die Verarbeitungszeit für das Imprägnieren und Einbringen des Auskleidungsmaterails weniger kritisch, solange eine merkliche UV-Bestrahlung der Harzzusammensetzung wirksam vermieden werden kann. Einen besonderen Vorteil ist es in diesem Falle, wenn der Folienschlauch des erfindungsgmäßen Auskleidungsmaterials für UV-Licht undurchlässig ist oder dieses zumindest stark abschwächt.

Bei der Verwendung von kalthärtenden Harzzusammensetzungen kann es insbesondere bei Anwendungen außerhalb geschlossener Räume erforderlich sein, die Topfzeit der Harzzusammensetzung unter Berücksichtigung der jahreszeitlich bedingten Außentemperatur einzustellen. Es ist auch denkbar, daß zur Durchführung des erfindungsgmäßen Verfahrens für bestimmte Temperaturbereiche vorkonfektionierte Harzzusammensetzungen oder zur Verlängerung der Tropfzeit vorgekühlte Harzzusammensetzungen verwendet werden.

Die Menge an in das erfindungsgemäße Auskleidungsmaterial einzubringender Harzzusammensetzung, bezogen auf eine Einheitslänge des Auskleidungsmaterials von 1 m, ist abhängig von dem Durchmesser der auszukleidenden Rohrleitung und der angestrebten Wanddicke der herzustellenden Auskleidung. Wie oben beschrieben ist es bevorzugt, daß der Textilschlauch in der erfindungsgemäßen Kanal- und/oder Rohrauskleidung soweit komprimiert ist, daß die Dicke der komprimierten Plüschlage gegenüber der unkomprimierten Dicke um 5-60% reduziert ist. Dies entspricht in grober Abschätzung einem bevorzugten Gewichtsverhältnis von verwendeten Harzmenge zum Gewicht des Textilschlauchs von ca. 1:1 bis 3:1.

Allgemein und als grobe Richtlinie ist zur Durchführung des erfindungsgemäßen Verfahres und zur Herstellung der erfindungsgemäßen Auskleidung eine Volumenmenge an Harzzusammensetzung geeignet, die im Bereich von 75-200 Vol.-% des dichtgepackten aber unkomprimierten erfindungsgemäßen Auskleidungsmaterials liegt.

Das ausgehärtete Harz sollte so beschaffen sein, daß von ihm keine Gefährdung der Umwelt ausgeht, d.h. es ist vorteilhaft, wenn das Harz unter den zu erwartenden Bedingungen in der ausgekleideten Leitung umweltindifferent ist.

Ferner ist es bevorzugt, wenn das Harz so ausgewählt wird, daß die ausgehärtete Harzzusammensetzung die für den individuellen Anwendungsfall vorherbestimmten Druckbeständigkeitswerte und sonstigen mechanischen Festigkeitswerte erfüllt.

Zudem ist es insbesondere bei der Auskleidung von Leitungen, die erhöhten Temperaturen ausgesetzt sind, wünschenswert, daß das Harz temperaturbeständig ist. Daher ist es erfindungsgemäß bevorzugt, daß ein Harz verwendet wird, das nach dem Aushärten eine Temperaturbeständigkeit von 80°C oder darüber aufweist, weiter bevorzugt von 100°C oder darüber.

Zur Erzielung weiterer vorteilhafter Eigenschaften der ausgehärteten Harzzusammensetzung können der der Basiszusammensetzung neben gegebenfalls erforderlichen Zusätzen, wie beispielsweise Härtern, weitere Zusatzstoffe zugegeben werden. Beispielsweise können zur Erhöhung der UV-Aushärtungseffizienz Photosensibilisatoren zugefügt werden, sowie Entlüfter zur Vermeidung von Gasbläschenbildung während des Aushärtens (z.B. aus der "Byk®-A" Serie, BYK-Chemie, Wesel), Netz- und Dispegieradditive zur Einstellung der Viskosität und Fließeigenschaften (z.B. aus der "Byk®-W" Serie, BYK-Chemie, Wesel), Schrumpf-reduzierende Additive, wie beispielsweise Additol® 6228 (Vianova Resins GmbH, Mainz-Kastel),sowie Vernetzungsmittel, Farbstoffe, Pigmente, Inhibitoren und Füllstoffe.

Wie bereits oben diskutiert ist es erfindungsgemäß vorteilhaft und bevorzugt, daß die als Imprägnierstoff verwendete härtbare Harzzusammensetzung während des Aushärtens mit dem Folienschlauch des erfindungsgemäßen Auskleidungsmaterials in einer solchen Weise reagiert, daß die ausgehärtete Harzzusammensetzung fest mit dem Folienschlauch verbunden ist. Dadurch wird die Gefahr verringert, daß der Folienschlauch von der erfindungsgemäßen Auskleidung delaminiert.

Daher ist es bevorzugt, die Harzzusammensetzung für die Imprägnierung und den Folienschlauch des erfindungsgemäßen Auskleidungsmaterials unter Berücksichtigung dieses Aspektes entsprechend auszuwählen. Die dafür erforderlichen Auswahlkriterien sind dem Fachmann bekannt.

Wie bereits oben angemerkt wird die gebrauchsfertig zubereitete Harzzusammensetzung in das erfindungsgemäße Auskleidungsmaterial eingefüllt und darin gleichmäßig verteilt. Dieses kann in vorteilhafterweise mittels einer Walzanlage mit einstellbarer Spaltbreite erfolgen. Nach dem Einfüllen und Verteilen der Harzzusammensetzung und Entfernung eventuell vorhandener Luftblasen wird ein Ende des harzimprägnierten Auskleidungsmaterials verschlossen, die gesamte Einheit in einen Inversionsschlauch eingeführt und die Enden des imprägnierten Auskleidungsmaterials und des Inversionsschlauches in bekannter Weise an einem Inversionsbogen befestigt.

Anschließend wird der Inversionsbogen in die auszukleidende Leitung eingeführt und der Inversionsbogen mit Druckluft beschickt. Dadurch wird das imprägnierte Auskleidungsmaterial zusammen mit dem Inversionsschlauch in die auszukleidende Leitung hineingepreßt, wobei der harzgetränkte Textilschlauch auf der Innenwand der auszukleidenden Leitung bzw. auf der wahlweise zuvor eingebrachten Abdichtungsfolie (Preliner) zu liegen kommt. Die Geschwindigkeit der Inversion wird vorzugsweise mittels einer Kamera aus einer Kameraschleuse am Inversionsbogen kontrolliert.

Beim Auftreten von Bögen in der auszukleidenden Leitung kann die Ausformung des Bogens durch einen druckbeaufschlagten Ballon unterstützt werden, der nach erfolgter Inversion aus einer Ballonschleuse am Inversionsbogen an die gewünschte Stelle verlegt werden kann.

Nach erfolgreich abgeschlossener Inversion und Positionierung des Auskleidungsmaterials in der auszukleidenden Leitung wird im Inversionsschlauch ein Druck aufrechterhalten, bis die härtbare Harzzusammensetzung ausgehärtet ist. Das Aushärten kann mittels eines UV-Lampen bestückten Mikro-Roboters (im Falle von UV-härtbaren Harzzusammensetzungen) oder durch Einströmen von Warmluft oder warmem Wasser mit vorherbestimmter Temperatur ausgelöst und gesteuert werden.

Nach dem Aushärten der Harzzusammensetzung werden der Inversionsschlauch und der Inversionsbogen entfernt und die hergestellte Auskleidung auf mögliche Fehler untersucht. Ferner wird der Endknoten sowie möglicherweise vorhandene Öffnungen zu seitlichen Abzweigungen mittels eines Mini-Roboters aufgefräst.

Bei der Auskleidung von verzweigten Rohrleitungen oder bei Zusammenflüssen von Leitungen werden diese jeweils einzeln nacheinander ausgekleidet, und die Verbindung der Auskleidungen an den Abzweigungsstellen wird anschließend unter Zurhilfenahme eines Mini-Roboters nachbearbeitet und nahtlos miteinander verklebt.

In einer erfindungsgemäß bevorzugten Ausführungsform wird der Textilschlauch, der Folienschlauch und/oder der Preliner durch Bedampfung im Vakuum oder elektrochemische Beschichtung mit Kupfer beschichtet. Dadurch läßt sich der Effekt erzielen, daß aufgrund der wachstumshemmenden Eigenschaften des Kupfers auf Pflanzen ein Einwachsen von Wurzeln wirksam verhindert wird.

Die erfindungsgemäßen Auskleidungsmaterialien sind vielseitig einsetzbar zur Herstellung von Auskleidungen, insbesondere von Kanal- und Rohrauskleidungen von öffentlichen oder privaten Abwassersystemen. Sie sind geeignet zur Reparatur und Sanierung maroder Leitungssysteme wie beispielsweise Abwasserleitungen, Gasleitungen, Abgasleitungen und Flüssigkeitstransportleitungen, und ermöglichen die Bereitstellung einer enganliegenden und faltenfreien Auskleidung des jeweiligen Systems, selbst wenn dieses geometrisch schwierige Passagen wie Verjüngungen oder Aufweitungen des Rohrdurchmessers, Bögen bis zu 90° oder andere Unregelmäßigkeiten aufweist.

Besonders Vorteilhaft treten die bei der Verwendung des erfindungsgmäßen Auskleidungsmaterials erzielbaren Effekte zu Tage, wenn zu deren Verarbeitung das erfindungsgemäße Verfahren zur Herstellung von Kanal- und/oder Rohrauskleidungen angewandt wird.

Nachfolgend wird die vorliegende Erfindung anhand von konkreten Ausführungsbeispielen weiter erläutert.

### BEISPIEL 1

Es wurde ein Textilschlauch aus Polyestermaterialien (Grundmaterial PES 167 dtex f48x2 x2, Henkelmaterial PES 550 dtex f96x1 x2) in rechts/links-Bindung hergestellt, das 104 Maschenstäbe/Umfang und 60 MR/10 cm aufwies. Es hatte eine flache Breite von 100 mm, eine Wanddicke von 4,0 mm und ein Gewicht von 860 g/lfm. Die mechanischen Eigenschaften waren wie folgt:

| | |
|---|---|
| Dehnbarkeit, längs [%] | 20 |
| Dehnbarkeit, quer [%] | 95 |
| Rückzug, längs [%] | 45 |
| Rückzug, quer [%] | 50 |
| Komprimierbarkeit [%] | 50 |
| Reißfestigkeit, längs [N/cm] | 90 |
| Reißfestigkeit, quer [N/cm] | 70 |

Dieser Textilschlauch wurde in einen PU-Folienschlauch mit 90 mm flacher Breite, 100 µm Dicke und den folgenden mechanischen Eigenschaften eingezogen.

| | |
|---|---|
| Dehnbarkeit, längs [%] | 270 |
| Dehnbarkeit, quer [%] | 460 |
| Rückzug, längs [%] | 25 |
| Rückzug, quer [%] | 40 |
| Reißfestigkeit, längs [N/cm] | 53 |
| Reißfestigkeit, quer [N/cm] | 51 |

Das so erhaltene Auskleidungsmaterial wurde mit einer Epoxidharzzusammensetzung (Bisphenol-A-Epichlorhydrin-Harze, MG < 700, Hexandioldiglycidylether, N-Aminoethylpiperazin, Trimethylhexamethylendiamin) in einer Menge von 1,5 kg/lfm imprägniert. Die Topfzeit der Harzzusammensetzung betrug ca. 20 min. bei 10°C und die Aushärtezeit ca. 2h. Das imprägnierte Auskleidungsmaterial wurde in der oben beschriebenen Weise bei einem Inversionsdruck von 0,9 bar Überdruck in ein Rohr mit einer Nennweite von 100 mm eingepreßt, das Bögen von 65 bzw. 90°, sowie einen seitlichen Einlaufansatz aufwies. Das Aushärten des Harzes erfolgte bei einem Druck von 0,6 bar Überdruck.

Die Dicke der Auskleidung nach dem Aushärten betrug 4,5 mm. Die Untersuchung der erhaltenen Auskleidung ergab folgende Resultate:

| | |
|---|---|
| Scheiteldruckfestigkeit [N/mm²] | 84,5 |
| Dichtigkeitsprüfung | ≥ 10m WS |
| Auskleidung des 65°-Bogens | faltenfrei |
| Auskleidung des 90°-Bogens | faltenfrei |
| Einlauf | gut erkennbar |

### Beispiel 2

Es wurde ein Textilschlauch aus Polyestematerialien (Grundmaterial PES-hochfest 550 dtex f96x1, Henkelmaterial PES-hochfest 550 dtex f96x1 x2) in rechts/links-Bindung hergestellt, das 158 Maschenstäbe/Umfang und 58 MR/10 cm aufwies. Es hatte eine flache Breite von 150 mm, eine Wanddicke von 3,5 mm und ein Gewicht von 770 g/lfm. Die mechanischen Eigenschaften waren wie folgt:

| | |
|---|---|
| Dehnbarkeit, längs [%] | 25 |
| Dehnbarkeit, quer [%] | 82 |
| Rückzug, längs [%] | 30 |
| Rückzug, quer [%] | 30 |
| Komprimierbarkeit [%] | 40 |
| Reißfestigkeit, längs [N/cm] | 110 |
| Reißfestigkeit, quer [N/cm] | 80 |

Dieser Textilschlauch im Vakuum mit Kupfer bedampft und dann in einen PU-Folienschlauch mit 135 mm flacher Breite, 100 µm Dicke und den folgenden mechanischen Eigenschaften eingezogen.

| | |
|---|---|
| Dehnbarkeit, längs [%] | 270 |
| Dehnbarkeit, quer [%] | 460 |
| Rückzug, längs [%] | 25 |
| Rückzug, quer [%] | 40 |
| Reißfestigkeit, längs [N/cm] | 53 |
| Reißfestigkeit, quer [N/cm] | 51 |

Das so erhaltene Auskleidungsmaterial wurde mit einer Epoxidharzzusammensetzung (Beckopox® EP 116, Vianova Resins, phenolfreier Aminhärter Beckopox® VEH 2628) in einer Menge von 2,75 kg/lfm imprägniert. Die Topfzeit der Harzzusammensetzung betrug ca. 30 min. bei 15°C und die Aushärtezeit ca. 2h. Das imprägnierte Auskleidungsmaterial wurde in der oben beschriebenen Weise bei einem Inversionsdruck von 1,0 bar Überdruck in ein Rohr mit 150 mm Nennweite eingepreßt, das Bögen von 65 bzw. 90°, sowie einen seitlichen Einlaufansatz aufwies. Das Aushärten des Harzes erfolgte bei einem Druck von 0,5 bar Überdruck.

Die Dicke der Auskleidung nach dem Aushärten betrug 4,0 mm. Die Untersuchung der erhaltenen Auskleidung ergab folgende Resultate:

| | |
|---|---|
| Scheiteldruckfestigkeit [N/mm²] | 78,8 |
| Dichtigkeitsprüfung | ≥ 8m WS |
| Auskleidung des 65°-Bogens | faltenfrei |
| Auskleidung des 90°-Bogens | faltenfrei |
| Einlauf | gut erkennbar |

### Beispiel 3

Es wurde ein Textilschlauch aus Mischmaterialien (Grundmaterial 80 dtex PU + 200 dtex Aramid 1x, Henkelmaterial 167 dtex f30x2, PES-texturiert, 1000 dtex PES-Stapelfasergarn) in rechts/links-Bindung hergestellt, das 104 Maschenstäbe/Umfang und 50 MR/10 cm aufwies. Es hatte eine flache Breite von 100 mm, eine Wanddicke von 6,0 mm und ein Gewicht von 1200 g/lfm. Die mechanischen Eigenschaften waren wie folgt:

| | |
|---|---|
| Dehnbarkeit, längs [%] | 50 |
| Dehnbarkeit, quer [%] | 140 |
| Rückzug, längs [%] | 95 |
| Rückzug, quer [%] | 85 |
| Komprimierbarkeit [%] | 35 |
| Reißfestigkeit, längs [N/cm] | 95 |
| Reißfestigkeit, quer [N/cm] | 65 |

Dieser Textilschlauch wurde in einen PU-Folienschlauch mit einer flachen Breite von 90 mm, 150 µm Dicke und den folgenden mechanischen Eigenschaften eingezogen.

| | |
|---|---|
| Dehnbarkeit, längs [%] | 240 |
| Dehnbarkeit, quer [%] | 360 |
| Rückzug, längs [%] | 45 |
| Rückzug, quer [%] | 40 |
| Reißfestigkeit, längs [N/cm] | 65 |
| Reißfestigkeit, quer [N/cm] | 55 |

Das so erhaltene Auskleidungsmaterial wurde mit einer Epoxidharzzusammensetzung (Beckopox® EP 116, Vianova Resins, phenolfreier Aminhärter Beckopox® VEH 2628) in einer Menge von 1,5 kg/lfm imprägniert. Die Topfzeit der Harzzusammensetzung betrug ca. 20 min. bei 10°C und die Aushärtezeit ca. 2h. Das imprägnierte Auskleidungsmaterial wurde in der oben beschriebenen Weise bei einem Inversionsdruck von 0.9 bar Überdruck in ein Rohr mit einer Nennweite von 100 mm eingepreßt, das Bögen von 65 bzw. 90°, sowie einen seitlichen Einlaufansatz aufwies. Das Aushärten des Harzes erfolgte bei einem Druck von 0,6 bar Überdruck.

Die Dicke der Auskleidung nach dem Aushärten betrug 4,5 mm. Die Untersuchung der erhaltenen Auskleidung ergab folgende Resultate:

| | |
|---|---|
| Scheiteldruckfestigkeit [N/mm²] | 84,5 |
| Dichtigkeitsprüfung | ≥ 10m WS |
| Auskleidung des 65°-Bogens | faltenfrei |
| Auskleidung des 90°-Bogens | Abstand von der Rohrwand im Bogen 1cm, faltenfrei |
| Einlauf | gut erkennbar |

## Patentansprüche

1. Auskleidungsmaterial, das einen nahtlosen Plüsch-Textilschlauch und einen darum koaxial und frei beweglich angeordneten Folienschlauch umfaßt, worin der Plüsch-Textilschlauch eine Dehnbarkeit in Längsrichtung von 10-70% und in Querrichtung von 50-200% besitzt, und worin die Kraft, die zur Dehnung des Folienschlauchs in Längs- wie in Querrichtung um 40% erforderlich ist, einen Betrag von 10 N/cm nicht übersteigt.

2. Auskleidungsmaterial gemäß Anspruch 1, worin der Plüsch-Textilschlauch aus Fasern besteht, die ausgewählt sind aus Fasern aus Polyester, Aramid, Polyamid, Polyurethan, Glas und Mischungen aus diesen Materialien.

3. Auskleidungsmaterial gemäß mindestens einem der vorangehenden Ansprüche, worin der elastische Anteil der Dehnbarkeit des Plüsch-Textilschlauchs, in Angaben des Rückzugs nach DIN 61632, 60% oder weniger beträgt.

4. Auskleidungsmaterial gemäß mindestens einem der vorangehenden Ansprüche, worin der Plüsch-Textilschlauch eine Komprimierbarkeit besitzt, die einer Abnahme der Dicke einer einzelnen Plüsch-Textilschicht um 5-60% der ursprünglichen Dicke bei Einwirkung einer Kompressionskraft von 0,4-0,8 bar zwischen zwei starren Oberflächen entspricht.

5. Auskleidungsmaterial gemäß mindestens einem der vorangehenden Ansprüche, worin der Plüsch-Textilschlauch eine Materialverteilung zwischen Warengrundfaser und Henkelfaser im Bereich von 1:99 bis 25:75 nach Gewicht aufweist.

6. Auskleidungsmaterial gemäß mindestens einem der vorangehenden Ansprüche, worin der Plüsch-Textilschlauch 30 bis 80 Maschenreihen/10 cm aufweist.

7. Auskleidungsmaterial gemäß mindestens einem der vorangehenden Ansprüche, worin der Plüsch-Textilschlauch so angeordnet ist, daß die Plüschhenkel in das Innere des Plüsch-Textilschlauchs gerichtet sind.

8. Auskleidungsmaterial gemäß mindestens einem der vorangehenden Ansprüche, worin der Folienschlauch im wesentlichen aus einem Polymer besteht, das ausgewählt ist aus Polyester, Silikon, Polyethylen, Polyurethan und Polyesterurethan.

9. Auskleidungsmaterial gemäß mindestens einem der vorangehenden Ansprüche, worin der elastische Anteil der Dehnbarkeit des Folienschlauchs, in Angaben des Rückzugs nach DIN 61632, 60% oder weniger beträgt.

10. Auskleidungsmaterial gemäß mindestens einem der vorangehenden Ansprüche, worin der Textilschlauch und/oder der Folienschlauch eine Kupferbeschichtung aufweist.

11. Verfahren zur Herstellung einer Kanal- und/oder Rohrauskleidung, das die folgenden Schritte umfaßt:
a) Imprägnieren eines Auskleidungsmaterials gemäß mindestens einem der Ansprüche 1-10 in geeigneter Länge mit einer härtbaren Harzzusammensetzung,
b) Einführen des imprägnierten Auskleidungsmaterials aus Schritt a) in einen Inversions-Druckschlauch,
c) Einpressen der Anordnung aus Schritt b) in den auszukleidenden Kanal- oder Rohrabschnitt mittels eines druckgetriebenen Inversionsverfahrens, und
d) Aushärten des Imprägnierstoffs unter Beibehaltung eines Druckes in dem Inversionsschlauch, der das Andrücken des imprägnierten Auskleidungsmaterials an die Wandung des Kanal- oder Rohrabschnitts gewährleistet.

12. Verfahren gemäß Anspruch 11, worin vor der Durchführung der Inversion in Schritt c) ein weiteres Abdichtungsmaterial in den auszukleidenden Rohrabschnitt eingebracht wird.

13. Verfahren gemäß Anspruch 12, worin das weitere Abdichtungsmaterial eine Kupferbeschichtung aufweist.

14. Verfahren gemäß mindestens einem der Ansprüche 11-13, worin das Inversionsverfahren in Schritt b) durch Druckbeaufschlagung mit Druckluft durchgeführt wird.

15. Verfahren gemäß mindestens einem der Ansprüche 11-14, worin das Einpressen des Auskleidungsmaterials mit einem Überdruck von 0.4-1.3 bar erfolgt.

16. Verfahren gemäß mindestens einem der Ansprüche 11-15, worin der Imprägnierstoff eine Harzzusammensetzung umfaßt, die ausgewählt ist aus kalthärtenden Epoxidharzen, kalthärtenden UP-Harzen, lichthärtenden UP-Harzen, PU-Harzen, Polyester-Harzen und Vinylesterharzen.

17. Verfahren gemäß mindestens einem der Ansprüche 11-16, worin nach dem Aushärten eine Nachbearbeitung mittels eines ferngesteuerten Roboters erfolgt.

18. Kanal- und/oder Rohrauskleidung, die ein invertiertes Auskleidungsmaterial gemäß mindestens einem der Ansprüche 1-10, umfassend einen Folienschlauch und einen nahtlosen Plüsch-Textilschlauch, sowie eine ausgehärtete Harzzusammensetzung, mit der der Plüsch-Textilschlauch imprägniert ist, und an der der Folienschlauch faltenfrei und fest anhaftet, umfaßt.

19. Kanal- und/oder Rohrauskleidung gemäß Anspruch 18, worin das ausgehärtete Harz das Aushärtungsprodukt einer Harzzusammensetzung ist, ausgewählt aus kalthärtenden Epoxidharzen, kalthärtenden UP-Harzen, lichthärtenden UP-Harzen, PU-Harzen, Polyester-Harzen und Vinylesterharzen.

20. Kanal- und/oder Rohrauskleidung gemäß Anspruch 18 oder 19, erhältlich nach einem Verfahren gemäß mindestens einem der Ansprüche 11-17.

## Claims

1. Lining material, which comprises a seamless plush textile tube and a film tube arranged coaxially around it to be freely movable, wherein the plush textile tube has a stretchability in the longitudinal direction of 10-70% and in the transverse direction of 50-200%, and wherein the force which is necessary to stretch the film tube in longitudinal and in transverse direction by 40 % does not exceed an amount of 10 N/cm.

2. Lining material according to claim 1, wherein the plush textile tube consists of fibres which are selected from fibres of polyester, aramide, polyamide, polyurethane, glass and mixtures of these materials.

3. Lining material according to at least one of the preceding claims, wherein the elastic portion of the stretchability of the plush textile tube, expressed as the return according to DIN 61 632, is 60 % or less.

4. Lining material according to at least one of the preceding claims, wherein the plush textile tube has a compressibility which corresponds to a decrease in thickness of an individual plush textile layer by 5-60% of the original thickness under the action of a compression force of 0.4-0.8 bar between two rigid surfaces.

5. Lining material according to at least one of the preceding claims, wherein the plush textile tube has a material distribution between basic textile fibres and loop fibres in the range from 1:99 to 25:75 according to weight.

6. Lining material according to at least one of the preceding claims, wherein the plush textile tube has 30 to 80 stitch rows/10 cm.

7. Lining material according to at least one of the preceding claims, wherein the plush textile tube is arranged so that the plush loops are directed into the interior of the plush textile tube.

8. Lining material according to at least one of the preceding claims, wherein the film tube consists essentially of a polymer which is selected from polyester, silicone, polyethylene, polyurethane and polyester urethane.

9. Lining material according to at least one of the preceding claims, wherein the elastic portion of the stretchability of the film tube, expressed as the return according to DIN 61 632, is 60 % or less.

10. Lining material according to at least one ofthe preceding claims, wherein the textile tube and/or the film tube has a copper coating.

11. Process for producing a conduit and/or pipe lining, which comprises the following steps:
a) impregnating a lining material according to at least one of claims 1-10 of suitable length with a curable resin composition,
b) introducing the impregnated lining material from step a) into an inversion pressure tube,
c) pressing the arrangement from step b) into the conduit or pipe section to be lined by means of a pressure-driven inversion process, and
d) curing the impregnating material while retaining a pressure in the inversion tube, which guarantees pressing of the impregnated lining material against the wall of the conduit or pipe section.

12. Process according to claim 11, wherein before carrying out the inversion in step c), a further sealing material is introduced into the pipe section to be lined.

13. Process according to claim 12, wherein the further sealing material has a copper coating.

14. Process according to at least one of claims 11-13, wherein the inversion process in step b) is carried out by pressure exposure using compressed air.

15. Process according to at least one of claims 11-14, wherein the pressing-in of the lining material is effected using an excess pressure of 0.4-1.3 bar.

16. Process according to at least one of claims 11-15, wherein the impregnating material comprises a resin composition which is selected from cold-curing epoxy resins, cold-curing UP resins, light-curing UP resins, PU resins, polyester resins and vinyl ester resins.

17. Process according to at least one of claims 11-16, wherein after curing, subsequent processing by means of a remote-controlled robot takes place.

18. Conduit and/or pipe lining which comprises an inverted lining material according to at least one of claims 1-10, comprising a film tube and a seamless plush textile tube, and a cured resin composition, with which the plush textile tube is impregnated, and to which the film tube adheres crease-free and firmly.

19. Conduit and/or pipe lining according to claim 18, wherein the cured resin is the cured product of a resin composition selected from cold-curing epoxy resins, cold-curing UP resins, light-curing UP resins, PU resins, polyester resins and vinyl ester resins.

20. Conduit and/or pipe lining according to claim 18 or 19, which can be obtained by a process according to at least one of claims 11-17.

## Revendications

1. Matériau de revêtement, comprenant un tuyau en textile en peluche ou bouclettes sans couture et un tuyau en feuilles, disposé co-axialement autour et mobile librement, dans lequel le tuyau en textile en peluche ou bouclettes présente une extensibilité, en direction longitudinale, de 10 à 70 % et, en direction transversale, de 50 à 200 %, et dans lequel la force, nécessaire pour obtenir l'extension du tuyau en feuilles dans la direction longitudinale ainsi que dans la direction transversale de 40 %, ne dépasse pas une valeur de 10 N/cm.

2. Matériau de revêtement selon la revendication 1, dans lequel le matériau textile en peluche est formé de fibrea sélectionnées parmi des fibres de polyester, aramide, polyamide, polyuréthane, verre et des mélanges de ces matériaux.

3. Matériau de revêtement selon au moins l'une des revendications précédentes, dans lequel la proportion élastique de l'extensibilité du tuyau textile en bouclettes ou peluche, exprimée selon les indications du retrait, suivant DIN 61632, est de 60 % ou moins.

4. Matériau de revêtement selon au moine l'une des revendications précédentes, le tuyau matériau textile en peluche ou bouclettes ayant une compressilité correspondant à une diminution de l'épaisseur d'une couche textile en bouclettes individuelle de 5 à 60 % de l'épaisseur initiale, sous l'effet d'une force de compression de 0,4 à 0,8 bar, entre deux surfaces rigides.

5. Matériau de revêtement selon au moins l'une des revendications précédentes, dans lequel le tuyau textile en peluche présente une distribution de matériau, entre les fibres de base du matériau et des fibres flottées, dans la plage de 1:99 à 25:75 selon le poids.

6. Matériau de revêtement selon au moins l'une des revendications précédentes, dans lequel le tuyau textile en peluche ou bouclettes présente de 30 à 80 rangées de maille/10 cm.

7. Matériau de revêtement selon au moins l'une des revendications précédentes, dans lequel le tuyau textile en peluche ou bouclettes est disposé de manière que la partie flottée en bouclettes soit orientée vers l'intérieur du tuyau textile en bouclettes.

8. Matériau de revêtement selon au moins l'une des revendications précédentes, dans lequel le tuyau en feuille est formé essentiellement d'un polymère sélectionné parmi le polyester, silicone, polyéthylène, polyuréthane et polyester uréthane.

9. Matériau de revêtement selon au moins l'une des revendications précédentes, dans lequel la proportion élastique de l'extensibilité du tuyau en feuille, exprimée en indication de retrait suivant DIN 61632, est de 60 % ou moins.

10. Matériau de revêtement selon au moins l'une des revendications précédentes, dans lequel le tuyau textile et/ou le tuyau en feuille présente(nt) un revêtement en cuivre.

11. Procédé de fabrication d'un revêtement pour canalisation et/ou pour tuyauterie, comprenant les étapes suivantes :
a) imprégnation d'un matériau de revêtement suivant au moins l'une des revendications 1 à 10 à la longueur appropriée avec une composition en résine durcissable,
b) introduction du matériau de revêtement imprégné issu de l'étape a) dans un tuyau de compression à inversion,
c) enfoncement de l'agencement issu de l'étape b) dans le tronçon de canal ou de tuyau à revêtir, au moyen d'un procédé à inversion fonctionnant par pression, et
d) durcissement du matériau d'imprégnation en conservant, à l'intérieur du tuyau d'inversion, une pression qui assure le pressage du matériau de revêtement imprégné sur la paroi du tronçon de canal ou de tuyau.

12. Procédé selon la revendication 11, dans lequel, avant de procéder à l'inversion à l'étape c), un autre matériau de revêtement est introduit dans le tronçon tubulaire en revêtement.

13. Procédé selon la revendication 12, dans lequel l'autre matériau d'étanchéité présente un revêtement en cuivre.

14. Procédé selon au moins l'une des revendications 11 à 13, dans lequel le procédé d'inversion effectué à l'étape b) est conduit par exposition à une pression, en utilisant de l'air comprimé.

15. Procédé selon au moins l'une des revendications 11 à 14, dans lequel l'enfoncement du matériau de revêtement se fait avec une surpression de 0,4 à 1,3 bar.

16. Procédé selon au moins l'une des revendications 11 à 15, dans lequel le matériau d'imprégnation comprend une composition de résines, sélectionnée parmi les résines époxy durcissant à froid, les résines UP durcissant à froid, les résines UP durcissant sous l'effet de la lumière, les résines PU, les résines de polyester et les résines de vinylester.

17. Procédé selon au moins l'une des revendications 11 à 16, dans lequel, après durcissement, on effectue un refaçonnage en utilisant un robot télécommandé.

18. Revêtement de canal et/ou de tuyauterie, comprenant un matériau de revêtement inversé selon au moins l'une des revendications 1 à 10, comprenant un tuyau en feuille et un tuyau en textile en bouclettes ou peluche sans couture, ainsi, qu'une composition de résines durcies, avec lequel le tuyau en textile en bouclettes est imprégné et sur lequel le tuyau en feuille adhère sans pli et fermement.

19. Revêtement de canal et/ou de tuyauterie selon la revendication 18, dans lequel la résine durcie est le produit de durcissement d'une composition de résines, sélectionnée parmi les résines époxy durcissant à froid, les résines UP durcissant à froid, les résines UP durcissant sous l'effet de la lumière, les résines PU, les résines de polyester et les résines de vinylester.

20. Revêtement de canal et/ou de tuyauterie selon la revendication 18 ou 19, obtenu selon un procédé suivant au moins l'une des revendications 11 à 17.
